# EUROPÄISCHE PATENTSCHRIFT

(11) **EP 0 628 058 B1**
(45) Veröffentlichungstag und Bekanntmachung des Hinweises auf die Patenterteilung: **28.08.1996**
(21) Anmeldenummer: 93903975.6
(22) Anmeldetag: 16.02.1993
(51) Int. Cl.: C08F 10/00, C08F 4/651, C08F 4/656

(54) **VERFAHREN ZUR POLYMERISATION VON C3-C10-ALK-1-ENEN OHNE MITVERWENDUNG EINER WEITEREN ELEKTRONENDONORVERBINDUNG**
METHOD OF POLYMERIZING C3-C10-ALK-1-ENES WITHOUT THE USE OF AN ADDITIONAL ELECTRON DONOR COMPOUND
PROCEDE DE POLYMERISATION DE C3-C10-ALK-1-ENES SANS CO-UTILISATION D'UN AUTRE COMPOSE DONNEUR D'ELECTRONS

(30) Priorität: 28.02.1992 DE 4206169
(43) Veröffentlichungstag der Anmeldung: 14.12.1994
(73) Patentinhaber: BASF Aktiengesellschaft, 67063 Ludwigshafen (DE)
(72) Erfinder: KERSTING, Meinolf, D-6702 Bad Duerkheim (DE); HUNGENBERG, Klaus-Dieter, D-6943 Birkenau (DE); KERTH, Juergen, D-6719 Carlsberg (DE)
(86) Internationale Anmeldenummer: EP9300363
(87) Internationale Veröffentlichungsnummer: WO9317051

(56) Entgegenhaltungen:
- EP-A- 0 180 420
- EP-A- 0 419 116
- EP-A- 0 448 115

## Beschreibung

Die vorliegende Erfindung betrifft ein Verfahren zur Polymerisation von C₃-C₁₀-Alk-1-enen mit Hilfe eines Ziegler-Natta-Katalysatorsystems, wobei man zunächst eine titanhaltige Feststoffkomponente, die eine Verbindung des Titans, des Magnesiums, ein Halogen und eine Elektronendonorverbindung I enthält, mit einer Aluminiumverbindung und einer weiteren Elektronendonorverbindung II umsetzt, danach das Reaktionsgemisch durch Reaktion mit Kohlendioxid inaktiviert und anschließend das dadurch erhaltene Katalysatorsystem zusammen mit einer Aluminiumverbindung zur Polymerisation von C₃-C₁₀-Alk-1-enen bei Temperaturen von 20 bis 150°C und Drükken von 1 bis 100 bar verwendet.

Katalysatorsysteme vom Typ der Ziegler-Natta-Katalysatoren sind u.a. aus der EP-B 014 523, der EP-A 045 975, der EP-A 045 977, der EP-A 086 473, der GB-A 2 111 066 und der US-A 4 857 613 bekannt. Diese Systeme werden insbesondere zur Polymerisation von Alk-1-enen verwendet und enthalten u.a. Verbindungen des mehrwertigen Titans, Aluminiumverbindungen, insbesondere Aluminiumhalogenide und/oder -alkyle, sowie Elektronendonorverbindungen, insbesondere Siliciumverbindungen, Ether, Carbonsäureester, Ketone und Lactone, die einerseits zusammen mit Verbindungen des mehrwertigen Titans und andererseits als eigenständige Katalysatorkomponente verwendet werden.

Die Herstellung derartiger Ziegler-Natta-Katalysatoren erfolgt üblicherweise in zwei Schritten, wobei man sich zunächst durch Umsetzung einer Verbindung des mehrwertigen Titans mit einer magnesiumhaltigen Verbindung und einer Elektronendonorverbindung eine titanhaltige Feststoffkomponente herstellt und diese anschließend bei der eigentlichen Polymerisation zusammen mit weiteren Katalysatorkomponenten, insbesondere einer Aluminiumverbindung sowie einer Elektronendonorverbindung einsetzt.

Weiterhin ist aus der älteren Anmeldung DE-P 4130353.9 bekannt, derartige Katalysatorsysteme im Anschluß an die Umsetzung der titanhaltigen Feststoffkomponente mit einer Aluminiumkomponente und einer Elektronendonorkomponente durch Reaktion mit Kohlendioxid zu inaktivieren, um auf diese Weise den Feinstkornanteil im entstehenden Polymerisat zu senken und die Stereospezifität zu verbessern. Nach einer anderen, in der älteren Anmeldung DE-P 4130354.7 beschriebenen Herstellungsmethode für Ziegler-Natta-Katalysatoren führt man nach der Umsetzung der titanhaltigen Feststoffkomponente mit einer Aluminiumkomponente und einer Elektronendonorkomponente eine Vorpolymerisation mit einem Alk-1-en durch und inaktiviert anschließend das vorpolymerisierte Katalysatorsystem mit Kohlendioxid. Auf diese Weise erhält man ein Polymerisat mit einem möglichst geringen Feinstkörnanteil und einer hohen Stereospezifität.

Bei den in diesen älteren Anmeldungen beschriebenen Verfahren wird ebenso wie in den aus dem Stand der Technik bekannten Verfahren zur Herstellung von Ziegler-Natta-Katalysatoren, bei der eigentlichen Polymerisation von C₃-C₁₀-Alk-1-enen, insbesondere von Propylen, neben einer titanhaltigen Feststoffkomponente und einer Aluminiumverbindung noch eine Elektronendonorverbindung II verwendet. Aufgabe dieser Elektronendonorverbindung II ist es, die Stereospezifität der bei der Ziegler-Natta-Polymerisation erhaltenen Polymerisate zu verbessern, d.h. den Anteil isotaktischer Polymerketten zu erhöhen. Zu diesem Zweck werden nach den, aus dem Stand der Technik bekannten Verfahren in den Polymerisationsreaktor zum Teil erhebliche Mengen von Elektronendonorverbindungen II, insbesondere von organischen Siliciumverbindungen, zusammen mit einer titanhaltigen Feststoffkomponente und einer Aluminiumverbindung eingebracht, was regelungstechnisch mit einem gewissen Mehraufwand verbunden ist.

Der vorliegenden Erfindung lag daher die Aufgabe zugrunde, ein regeltechnisch weniger aufwendiges Verfahren zur Polymerisation von C₃-C₁₀-Alk-1-enen zu entwickeln, bei welchem die Zugabe von Katalysatorkomponenten verringert werden kann, ohne daß sich dabei die Eigenschaften der dabei erhältlichen Polymerisate wesentlich verschlechtern.

Demgemäß wurde ein Verfahren zur Polymerisation von C₃-C₁₀-Alk-1-enen mit Hilfe eines Ziegler-Natta-Katalysatorsystems gefunden, wobei man zunächst eine titanhaltige Feststoffkomponente, die eine Verbindung des Titans, des Magnesiums, ein Halogen und eine Elektronendonorverbindung I enthält, mit einer Aluminiumverbindung und einer weiteren Elektronendonorverbindung II umsetzt, danach das Reaktionsgemisch durch Reaktion mit Kohlendioxid inaktiviert und anschließend das dadurch erhaltene Katalysatorsystem zusammen mit einer Aluminiumverbindung zur Polymerisation von C₃-C₁₀-Alk-1-enen bei Temperaturen von 20 bis 150°C und Drükken von 1 bis 100 bar verwendet, welches dadurch gekennzeichnet ist, daß man bei der Polymerisation auf die Zugabe weiterer Mengen der Elektronendonorverbindung II verzichtet.

Die verwendeten Ziegler-Natta-Katalysatorsysteme bestehen neben einer titanhaltigen Feststoffkomponente, die eine Verbindung des Titans und des Magnesiums, ein Halogen und eine Elektronendonorverbindung I enthält, noch aus einer Aluminiumverbindung und einer Elektronendonorverbindung II.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Siliciumund Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen ein Teilchendurchmesser von 0,1 bis 1000 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m² auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen I, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen I innerhalb der titanhaltigen Feststoffkomponente Phthalsäurederivate der allgemeinen Formel I 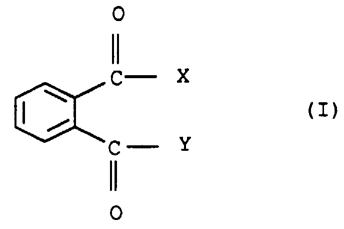 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen I innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt SiO₂·aAl₂O₃ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1 mol, der Elektronendonorverbindung I ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit weiteren Katalysatorkomponenten, sogenannten Cokatalysatoren als Ziegler-Natta-Katalysatorsystem verwendet. Als Cokatalysatoren kommen dabei Aluminiumverbindungen und Elektronendonorverbindungen II in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Weiterhin verwendet man neben der Aluminiumverbindung noch als weiteren Cokatalysator Elektronendonorverbindungen II wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen II sind dabei siliciumorganische Verbindungen der allgemeinen Formel II

R¹ ₙSi(OR²)₄₋ₙ II

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆-bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bei der Herstellung der im erfindungsgemäßen Verfahren verwendeten Ziegler-Natta-Katalysatorsysteme wird zunächst die titanhaltige Feststoffkomponente mit den Cokatalysatoren, d.h. der Aluminiumverbindung und der Elektronendonorverbindung II umgesetzt. Die Umsetzung erfolgt dabei zweckmäßigerweise in der flüssigen Phase. Liegt dabei die Aluminiumverbindung und die Elektronenverbindung II als Flüssigkeit vor, so kann auf die Mitverwendung eines Lösungsmittels verzichtet werden. Ansonsten empfiehlt sich die Mitverwendung eines inerten Lösungsmittels.

Als Lösungsmittel sind flüssige Kohlenwasserstoffe, bevorzugt C₅- bis C₁₀-Alkane oder Gemische aus diesen Kohlenwasserstoffen geeignet. Als besonders bevorzugte Lösungsmittel werden n-Hexan oder n-Heptan verwendet.

Die Aluminiumverbindung und die Elektronendonorverbindung II werden üblicherweise bei einer Temperatur von -20 bis 60°C, bevorzugt bei 0 bis 30°C, mit der titanhaltigen Feststoffkomponente und der Elektronendonorverbindung II umgesetzt. Zweckmäßigerweise wird dazu die titanhaltige Feststoffkomponente in einer Lösung der Aluminiumverbindung und der Elektronendonorverbindung II suspendiert.

Bevorzugt werden solche Gemische verwendet, bei denen das Molverhältnis von Aluminiumverbindung zu Titan aus der titanhaltigen Feststoffkomponente 0,1:1 bis 10:1, insbesondere 1:1 bis 5:1, und das Molverhältnis von Aluminiumverbindung zur Elektronendonorverbindung II 0,1:1 bis 200:1, insbesondere 0,5:1 bis 30:1 beträgt.

Die Reaktionsdauer für die Umsetzung beträgt üblicherweise bis zu drei Stunden, bevorzugt bis 30 Minuten.

Im Anschluß an die Umsetzung der einzelnen Komponenten wird das Ziegler-Natta-Katalysatorsystem durch Reaktion mit, bevorzugt trokkenem, Kohlendioxid inaktiviert.

Die Umsetzung erfolgt bevorzugt bei einer Temperatur von -20°C bis 60°C, bevorzugt bei 0 bis 25°C. Das Kohlendioxid kann als Gas direkt in die Katalysatorsuspension eingeleitet werden. Kohlendioxid kann auch in fester Form in die Katalysatorsuspension gegeben werden. Es ist aber auch möglich, den Gasraum über der Suspension mit Kohlendioxid anzufüllen, bevorzugt mit einem Druck von 1 bis 30 bar, insbesondere von 1 bis 8 bar. Diese Form der Umsetzung mit Kohlendioxid wird bevorzugt.

Zur schnelleren Umsetzung kann die Katalysatorsuspension während der Reaktion mit Kohlendioxid gerührt werden.

Die Dauer der Umsetzung beträgt üblicherweise bis zu 3 Stunden, bevorzugt wird die Umsetzung in 0,5 bis 3 Stunden durchgeführt.

Durch die Umsetzung mit Kohlendioxid wird das Katalysatorsystem inaktiviert, d.h. es ist in der Regel nicht mehr polymerisationsaktiv. Die so hergestellten Katalysatorsysteme weisen eine gute Lagerstabilität auf. Sie können z.B. als Feststoff aufbewahrt werden.

Vor einem Einsatz in einer Polymerisationsreaktion werden die nach dem erfindungsgemäßen Verfahren hergestellten Katalysatorsysteme durch Umsetzen mit einem Cokatalysator wieder aktiviert.

Nach einem besonders bevorzugten Verfahren wird nach der Umsetzung der titanhaltigen Feststoffkomponente mit der Aluminiumverbindung und der Elektronenverbindung II, aber noch vor der Inaktivierung des Reaktionsgemisches mit Kohlendioxid eine Vorpolymerisation mit einem C₂-C₁₀-Alk-1-en durchgeführt. Vorzugsweise wird dabei ein C2-C6-Alk-1-en, oder ein Gemisch aus mehreren C₂-C₆-Alk-1-enen verwendet. Besonders bevorzugte Alk-1-ene sind dabei Ethylen, Propylen und But-1-en.

Die Vorpolymerisation kann sowohl in der Gasphase, als auch in einer Lösung eines inerten Lösungsmittels oder in einer Suspension durchgeführt werden. Bevorzugt sind dabei die Gasphasenpolymerisation und die Lösungspolymerisation.

Üblicherweise wird die Vorpolymerisation bei einer Temperatur von -20 bis 60°C, insbesondere von 0 bis 30°C und bei einem Druck von 1 bis 20 bar, insbesondere von 1 bis 10 bar durchgeführt. Die Polymerisationszeit hängt dabei wesentlich von den jeweils eingestellten Bedingungen ab, d.h. von den jeweils gewählten Temperaturen und Drücken. Sie beträgt üblicherweise etwa 1 bis 180 Minuten, vorzugsweise 1 bis 60 Minuten.

Die Vorpolymerisation erfolgt üblicherweise solange, bis ein Massenverhältnis von 0,1 bis 30 Teilen, bevorzugt von 0,1 bis 5 Teilen polymerisiertem C₂-C₁₀-Alk-1-en pro Teil titanhaltiger Feststoffkomponente erreicht ist. Üblicherweise wird die Vorpolymerisation mit der Zuführung der C₂-C₁₀-Alk-1-ene gestartet. Diese kann sowohl kontinuierlich als auch diskontinuierlich vorgenommen werden.

Da Ziegler-Natta-Katalysatorsysteme anfangs in der Regel eine lineare Aktivitäts-Zeitkurve aufweisen, läßt sich die Polymerbeladung des Katalysators d.h. die Zahl der Gewichtsteile Polyalk-1-en pro Gewichtsteil Katalysatorfeststoff bei kontinuierlicher C₂-C₁₀-Alk-1-en-Einleitung über die Einleitungszeit gut steuern.

Der Vorpolymerisation schließt sich die Inaktivierung mit Kohlendioxid an, wie dies bereits beschrieben ist.

Vor einem Einsatz des Katalysatorsystems während der eigentlichen Polymerisation wird dieses durch Umsetzen mit einem Cokatalysator wieder aktiviert. Nach dem erfindungsgemäßen Verfahren genügt es dabei, lediglich eine Aluminiumverbindung zu verwenden, also auf die Zugabe weiterer Mengen der Elektronendonorverbindung II zu verzichten. Als Aluminiumverbindungen können die gleichen Verbindungen verwendet werden, die bereits bei der Umsetzung mit der titanhaltigen Feststoffkomponente zu Beginn des Herstellungsverfahrens des Katalysatorsystems eingesetzt wurden. Dabei wird die Aluminiumverbindung in solchen Mengen üblicherweise verwendet, daß das Atomverhältnis zwischen Aluminium aus der Aluminiumverbindung und Titan aus der titanhaltigen Feststoffkomponente 10:1 bis 800:1, insbesondere 20:1 bis 200:1, beträgt.

Der Verzicht auf die Mitverwendung der Elektronendonorverbindung II bei der Polymerisation von C₃-C₁₀-Alk-1-enen erscheint überraschend, weil bei der Polymerisation derartiger Alk-1-ene üblicherweise neben der titanhaltigen Feststoffkomponente und der Aluminiumverbindung noch eine weitere Elektronendonorverbindung II verwendet wird, welche die Stereospezifität der dabei erhaltenen Polymerisate verbessert, d.h. den Anteil isotaktischer Polymerketten erhöht. Entsprechend dem erfindungsgemäßen Verfahren reicht die Verwendung üblicher Mengen der Elektronendonorverbindung II bei der Herstellung des Katalysatorsystems aus, um Polymerisate mit einer ausreichend hohen Stereospezifität zu erhalten.

Mit Hilfe des erfindungsgemäßen Verfahrens können C₃-C₁₀-Alk-1-ene polymerisiert werden, insbesondere C₃-C₆-Alk-1-ene, beispielsweise Propylen. Das Verfahren eignet sich vorwiegend zur Herstellung von Homopolymerisaten von C₃-C₁₀-Alk-1-enen, es können aber auch bis zu 10 Gew.-% Comonomere mitpolymerisiert werden. Als Comonomere sind neben C₃-C₁₀-Alk-1-enen und Ethylen noch die in der Polymerisationstechnik üblicherweise zur Copolymerisation mit Alk-1-enen verwendeten Comonomere geeignet, beispielsweise ungesättigte Carbonsäurederivate, Diene oder Styrol.

Die Herstellung von Polymerisaten von C₃-C₁₀-Alk-1-enen, insbesondere von Polymerisaten des Propylens kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in eienr Reihe von mehreren, hintereinander geschalteten Reaktoren durchgeführt werden. Die Reaktionsdauer hängt entscheidend von den jeweils gewählten Reaktionsbedingungen ab. Sie liegt üblicherweise zwischen 0,2 und 20 Stunden, meistens zwischen 0,5 und 10 Stunden.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 100°C und Drücke von 10 bis 50 bar. Die Molmasse der dabei gebildeten Polyalk-1-ene kann durch Zugabe von in der Polymerisationstechnik gebräuchlichen Reglern, beispielsweise von Wasserstoff, kontrolliert und auf eine engere Verteilung eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden.

Die nach dem erfindungsgemäßen Verfahren hergestellten Polymerisate sind in den für Polyalk-1-ene üblichen Molmassen erhältlich, wobei Polymerisate mit Molmassen zwischen 20 000 und 1000 000 bevorzugt werden. Ihre Schmelzflußindizes liegen im Bereich von 0,1 bis 100 g/10 min., vorzugsweise im Bereich von 1 bis 50 g/10 min., bei 230°C und unter einem Gewicht von 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Das erfindungsgemäße Verfahren ermöglicht die Herstellung von Polymerisaten von C₃-C₁₀-Alk-1-enen mit hoher Produktivität, wobei auf die Zugabe weiterer Mengen der Elektronendonorverbindung II verzichtet werden kann. Die dabei erhältlichen Polymerisate weisen eine für gewerbliche Zwecke ausreichend hohe Stereospezifität auf und können leicht zu Folien und Formkörpern verarbeitet werden.

### Beispiele

### Beispiel 1

### a) Herstellung der titanhaltigen Feststoffkomponente

In einer ersten Stufe wurde SiO₂, das einen Teilchendurchmesser von 20 bis 45 µm, ein Porenvolumen von 1,7 ml/g und eine spezifische Oberfläche von 330 m²/g aufwies, mit einer Lösung von n-Butyloctylmagnesium in n-Heptan versetzt, wobei pro Mol SiO2 0,3 Mol der Magnesiumverbindung eingesetzt wurden. Die Lösung wurde 45 Minuten bei 40°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und anschließend mit 7,2 Mol Titantetrachlorid und 0,3 Mol von in Ethylbenzol gelöstem Di-n-butylphthalat, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt

| | |
|---|---|
| 3,6 | Gew.-% Ti |
| 7,7 | Gew.-% Mg |
| 24,9 | Gew.-% Cl. |

### b) Vorpolymerisation der titanhaltigen Feststoffkomponente und anschließende Inaktivierung

In einem mit Rührer versehenen 1 1-Glasautoklaven wurden 700 ml n-Heptan vorgelegt und das Reaktionsgefäß auf eine Innentemperatur von 5°C abgekühlt. Zu dem Lösungsmittel wurden 47,4 ml Triethylaluminium (in Form einer 1,0-molaren Lösung in n-Heptan) und 13,2 ml Dimethoxyisobutylisopropylsilan (in Form einer 1,0 molaren Lösung in n-Heptan) zugegeben. Anschließend wurden 20 g der gemäß Beispiel la hergestellten titanhaltigen Feststoffkomponente zugegeben. Unter Rühren wurde dann kontinuierlich über ein Einleitungsrohr 1 Stunde lang gasförmiges Propylen bei einem Druck von 1 bar eingeleitet. Während der Propylenzufuhr wurde die Innentemperatur zwischen 5 und 20°C gehalten. Nach Beendigung der Propylenzufuhr wurde kontinuierlich unter Rühren über ein Einleitungsrohr 1 Stunde lang gasförmiges, trockenes Kohlendioxid (Durchflußmenge: 14,5 l/h) bei einem Druck von 1 bar in die Katalysatorsuspension eingeleitet. Dadurch wurde die polymerisationsaktive Katalysatorsuspension inaktiviert.

Man erhielt 93 g eines Feststoffs, der 3,6 Gewichtsteile Polypropylen auf ein Gewichtsteil Katalysatorfeststoff enthielt.

### c) Polymerisation von Propylen

In einem Stahlautoklaven von 10 1 Volumen, ausgerüstet mit einem Rührer, wurden 50 g Polypropylen (Schmelzflußindex: 8 g/10 min), 20 mMol Triethylaluminium (in Form einer 1,0-molaren Lösung in n-Heptan) als Aluminiumkomponente, 10 Normalliter Wasserstoff und schließlich 120 mg des gemäß Beispiel 1a und 1b hergestellten Katalysatorsystems bei 31°C vorgelegt. Anschließend wurde die Reaktortemperatur innerhalb von 10 min auf 70°C erhöht und der Reaktordruck durch Aufpressen von gasförmigem Propylen auf 28 bar gebracht. Die Polymerisation wurde unter ständigem Rühren bei 70°C und 28 bar 2 Stunden lang durchgeführt. Hierbei wurde das verbrauchte Monomere kontinuierlich durch Neues ersetzt.

Nach Beendigung der Gasphasenpolymerisation erhielt man ein Propylenhomopolymerisat mit einem Schmelzflußindex von 9,1 g/10 min. Die Produktivität des Katalysatorsystems, die als das Verhältnis der Menge an gebildetem Polymerisat zur Menge der titanhaltigen Feststoffkomponente definiert wird, der heptanunlösliche Anteil, der eine Maßzahl für den Anteil an isotaktischen Struktureinheiten darstellt, die Polymerbeladung der vorpolymerisierten titanhaltigen Feststoffkomponente, die als das Verhältnis der Menge an vorpolymerisiertem Alk-1-en zur Menge der titanhaltigen Feststoffkomponente vor der Polymerisation definiert wird, sowie weitere Reaktionsbedingungen der Vorpolymerisation sind in der nachstehenden Tabelle zusammengestellt.

Die Ergebnisse der Beispiele 2-4 sowie des Vergleichsbeispiels A sind ebenfalls in der Tabelle aufgeführt.

### Beispiel 2

Die titanhaltige Feststoffkomponente wurde entsprechend dem Beispiel la hergestellt.

Weiterhin wurde entsprechend dem Beispiel 1b vorpolymerisiert und inaktiviert, jedoch betrug die Polymerbeladung nur 2,27.

Mit dem vorpolymerisiertem Katalysator wurde Propylen entsprechend Beispiel lc polymerisiert.

### Beispiel 3

Entsprechend Beispiel la wurde die titanhaltige Feststoffkomponente hergestellt.

Die Vorpolymerisation der titanhaltigen Feststoffkomponente erfolgte entsprechend Beispiel 1b, jedoch betrug die Polymerbeladung 1,7, anstelle von 3,6. Weiterhin wurden abweichend zu Beispiel 1b 26,3 ml Dimethoxyisobutylisopropylsilan (in Form einer 1,0-molaren Lösung in n-Heptan) hinzugegeben.

Mit diesem vorpolymerisierten Katalysator wurde Propylen entsprechend Beispiel 1c polymerisiert.

### Beispiel 4

Entsprechend Beispiel la wurde die titanhaltige Feststoffkomponente hergestellt.

Die Vorpolymerisation der titanhaltigen Feststoffkomponente erfolgte entsprechend Beispiel 1b, jedoch betrug die Polymerbeladung 4,1. Außerdem wurde abweichend vom Beispiel 1b 26,3 ml Dimethoxyisobutylisopropylsilan (in Form einer 1,0-molaren Lösung in n-Heptan) hinzugegeben.

Mit diesem vorpolymerisiertem Katalysator wurde Propylen entsprechend Beispiel 1c polymerisiert.

### Vergleichsbeispiel A

Entsprechend dem Beispiel la wurde eine titanhaltige Feststoffkomponente hergestellt und diese gemäß dem Beispiel 1b einer Vorpolymerisation und anschließenden Inaktivierung unterworfen. Anschließend wurde entsprechend dem Beispiel 1c polymerisiert; abweichend vom Beispiel 1c wurden zusätzlich 2 mMol Dimethoxyisobutylisopropylsilan (in Form einer 1,0 molaren Lösung in n-Heptan) als Elektronendonorverbindung II hinzugefügt.

**Tabelle**

| | Beispiele | | | | Vergleichsbeispiel |
|---|---|---|---|---|---|
| | 1 | 2 | 3 | 4 | A |
| Vorpolymerisationsbedingungen | | | | | |
| mmol Triethylaluminium | 47,4 | 47,4 | 47,4 | 47,4 | 47,4 |
| mmol Dimethoxyisobutylisopropylsilan | 13,2 | 13,2 | 26,3 | 26,3 | 13,2 |
| Polymerbeladung [g/g] | 3,6 | 2,27 | 1,7 | 4,1 | 3,6 |
| Produktivität | | | | | |
| [g Polypropylen/g Katalysator] | 10280 | 11560 | 10840 | 10750 | 10280 |
| Stereospezifität | | | | | |
| Heptanunlöslicher Anteil [Gew.-%] | 95,1 | 94,7 | 97,5 | 97,2 | 98,8 |
| Schmelzflußindex^{a)} | | | | | |
| [g/10 min.] | 9,1 | 11,6 | 8,3 | 8,5 | 7,7 |

| | | | | | |
|---|---|---|---|---|---|
| ^{a)} nach DIN 53735, bei 230°C und unter einem Gewicht von 2,16 kg | | | | | |

Aus einem Vergleich zwischen den erfindungsgemäßen Beispielen 1 bis 4 und dem Vergleichsbeispiel A wird deutlich, daß auf die Zugabe von weiteren Mengen an Elektronendonorverbindung II bei der Polymerisation verzichtet werden kann, ohne daß dadurch die Produktivität merklich abnimmt und die Stereospezifität erheblich schlechter wird.

## Patentansprüche

1. Verfahren zur Polymerisation von C₃-C₁₀-Alk-1-enen mit Hilfe eines Ziegler-Natta-Katalysatorsystems, wobei man zunächst eine titanhaltige Feststoffkomponente, die eine Verbindung des Titans, des Magnesiums, ein Halogen und eine Elektronendonorverbindung I enthält, mit einer Aluminiumverbindung und einer weiteren Elektronendonorverbindung II umsetzt, danach das Reaktionsgemisch durch Reaktion mit Kohlendioxid inaktiviert und anschließend das dadurch erhaltene Katalysatorsystem zusammen mit einer Aluminiumverbindung zur Polymerisation von C₃-C₁₀-Alk-1-enen bei Temperaturen von 20 bis 150°C und Drücken von 1 bis 100 bar verwendet, dadurch gekennzeichnet, daß man bei der Polymerisation auf die Zugabe weiterer Mengen der Elektronendonorverbindung II verzichtet.

2. Verfahren nach Anspruch 1, dadurch gekennzeichnet, daß man nach der Umsetzung der titanhaltigen Feststoffkomponente mit der Aluminiumverbindung und der Elektronendonorverbindung II, aber noch vor der Inaktivierung des Reaktionsgemisches mit Kohlendioxid eine Vorpolymerisation mit einem C₂-C₁₀-Alk-1-en durchführt.

3. Verfahren nach Anspruch 2, dadurch gekennzeichnet, daß man die Vorpolymerisation mit dem C₂-C₁₀-Alk-1-en so lange durchführt, bis ein Massenverhältnis von 0,1 bis 30 Teilen polymerisiertem C₂C₁₀ Alk-1-en pro Teil Katalysator erreicht ist.

4. Verfahren nach den Ansprüchen 1 bis 3, dadurch gekennzeichnet, daß man als Aluminiumverbindung eine Trialkylaluminiumverbindung verwendet, deren Alkylgruppen jeweils 1 bis 8 C-Atome aufweisen.

5. Verfahren nach den Ansprüchen 1 bis 4, dadurch gekennzeichnet, daß man als Elektronendonorverbindung I ein Phthalsäurederivat der allgemeinen Formel (I) 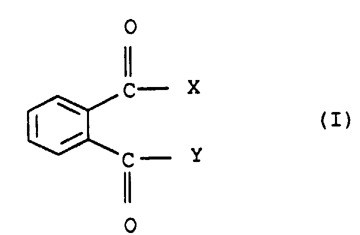 verwendet, wobei X und Y jeweils für ein Chloratom oder einen C₁- bis C₁₀-Alkoxyrest oder gemeinsam für Sauerstoff stehen.

6. Verfahren nach den Ansprüchen 1 bis 5, dadurch gekennzeichnet, daß man als Elektronendonorverbindung II siliciumorganische Verbindungen der allgemeinen Formel II
R¹ ₙSi(OR²)₄₋ₙ (II)
verwendet, wobei R¹ gleich oder verschieden ist und eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht.

## Claims

1. A process for the polymerization of C₃-C₁₀-alk-1-enes with the aid of a Ziegler-Natta catalyst system, in which first a titanium-containing solid component which contains a compound of titanium, of magnesium, a halogen and an electron donor compound I is reacted with an aluminum compound and a further electron donor compound II, the reaction mixture is then deactivated by reaction with carbon dioxide and the catalyst system thus obtained is then used, together with an aluminum compound, for the polymerization of C₃-C₁₀-alk-1-enes at from 20 to 150°C and from 1 to 100 bar, wherein the addition of further amounts of electron donor compound II is dispensed with in the polymerization.

2. A process as claimed in claim 1, wherein a prepolymerization with a C₂-C₁₀-alk-1-ene is carried out after the reaction of the titanium-containing solid component with the aluminum compound and the electron donor compound II but before the deactivation of the reaction mixture with carbon dioxide.

3. A process as claimed in claim 2, wherein the prepolymerization is carried out with the C₂-C₁₀-alk-1-ene until a mass ratio of from 0.1 to 30 parts of polymerized C₂-C₁₀-alk-1-ene per part of catalyst has been reached.

4. A process as claimed in claims 1 to 3, wherein the aluminum compound used is a trialkylaluminum compound whose alkyl groups are each of 1 to 8 carbon atoms.

5. A process as claimed in claims 1 to 4, wherein a phthalic acid derivative of the formula (I) 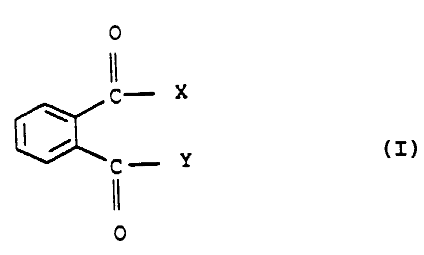 where X and Y are each chlorine or C₁-C₁₀-alkoxy or together are oxygen, is used as electron donor compound I.

6. A process as claimed in claims 1 to 5, wherein an organosilicon compound of the formula II
R¹ ₙSi(OR²)₄₋ₙ (II)
where the radicals R¹ are identical or different and are each 5-membered to 7-membered cycloalkyl, which in turn may carry a C₁-C₁₀-alkyl group, or C₆-C₂₀-aryl or arylalkyl, the radicals R² are identical or different and are each C₁-C₂₀-alkyl and n is 1, 2 or 3, is used as electron donor compound II.

## Revendications

1. Procédé de polymérisation d'alcènes-1 en C₃-C₁₀ à l'aide d'un système catalytique de Ziegler-Natta, dans lequel on commence par faire réagir un composant solide contenant du titane, qui renferme un composé du titane, un composé du magnésium, un halogène et un composé donneur d'électrons I, avec un composé de l'aluminium et un autre composé donneur d'électrons II, après quoi on rend inactif le mélange réactionnel par réaction avec de l'anhydride carbonique et on utilise ensuite le système catalytique ainsi obtenu, en même temps qu'un composé de l'aluminium, pour la polymérisation d'alcènes-1 en C₃-C₁₀ à des températures de 20 à 150°C et sous des pressions de 1 à 100 bar, caractérisé en ce qu'au cours de la polymérisation, on se passe de l'addition de quantités supplémentaires du composé donneur d'électrons II.

2. Procédé selon la revendication 1, caractérisé en ce qu'après la mise en réaction du composant solide contenant du titane avec le composé de l'aluminium et le composé donneur d'électrons II, mais avant de rendre inactif le mélange réactionnel avec de l'anhydride carbonique, on effectue une prépolymérisation avec un alcène-1 en C₂-C₁₀.

3. Procédé selon la revendication 2, caractérisé en ce que l'on effectue la prépolymérisation avec l'alcène-1 en C₂-C₁₀ jusqu'à ce que soit atteint un rapport de masse de 0,1 à 30 parties d'alcène-1 en C₂-C₁₀ polymérisé par partie de catalyseur.

4. Procédé selon l'une quelconque des revendications 1 à 3, caractérisé en ce que l'on utilise, comme composé de l'aluminium, un composé trialkylaluminium dont les groupements alkyle comportent chacun 1 à 8 atomes de carbone.

5. Procédé selon l'une quelconque des revendications 1 à 4, caractérisé en ce que l'on utilise, comme composé donneur d'électrons I, un dérivé d'acide phtalique de formule générale (I) 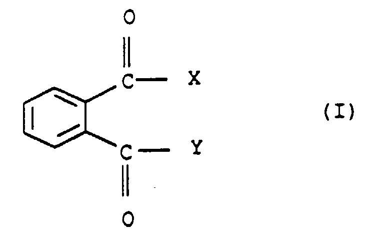 dans laquelle X et Y sont mis chacun pour un atome de chlore ou un reste alcoxy en C₁-C₁₀ ou sont mis ensemble pour un atome d'oxygène.

6. Procédé selon l'une quelconque des revendications 1 à 5, caractérisé en ce que l'on utilise, comme composé donneur d'électrons II, des composés organosiliciés de formule générale II
R¹ ₙSi(OR²)₄₋ₙ (II)
dans laquelle les restes R¹ sont identiques ou différents et représentent chacun un groupement cycloalkyle à 5-7 chaînons, qui peut porter de son côté un groupement alkyle en C₁-C₁₀, ou un groupement aryle en C₆-C₂₀ ou arylalkyle, les restes R² sont identiques ou différents et représentent chacun un groupement alkyle en C₁-C₂₀, et n est mis pour le nombre 1, 2 ou 3.
